# EUROPÄISCHE PATENTSCHRIFT

(11) **EP 2 853 557 B1**
(45) Veröffentlichungstag und Bekanntmachung des Hinweises auf die Patenterteilung: **09.11.2016**
(21) Anmeldenummer: 13186371.4
(22) Anmeldetag: 27.09.2013
(51) Int. Cl.: C08K 3/04, B60C 1/00, C08L 9/00, C08L 9/06

(54) **Schwefelvernetzbare Kautschukmischung**
Sulfur crosslinkable rubber composition
Composition de caoutchouc réticulable au soufre

(43) Veröffentlichungstag der Anmeldung: 01.04.2015
(73) Patentinhaber: Continental Reifen Deutschland GmbH, 30165 Hannover (DE)
(72) Erfinder: Herzog, Katharina, 31177 Harsum (DE); Recker, Carla, 30167 Hannover (DE); Jungk, Juliane, 30916 Isernhagen (DE)
(74) Vertreter: Finger, Karsten

(56) Entgegenhaltungen:
- EP-A1- 1 484 362
- EP-A1- 1 939 225
- EP-A1- 2 070 952
- EP-A1- 2 236 554
- EP-A1- 2 289 712
- EP-A1- 2 357 211
- EP-A1- 2 452 972

## Beschreibung

Die Erfindung betrifft eine schwefelvernetzbare Kautschukmischung, insbesondere für Fahrzeugreifen, Gurte, Riemen und Schläuche.

Die Kautschukzusammensetzung des Laufstreifens bestimmt in hohem Maße die Fahreigenschaften eines Reifens, insbesondere eines Fahrzeugluftreifens. Ebenso sind die Kautschukmischungen, die in Riemen, Schläuchen und Gurten Verwendung vor allem in den mechanisch stark belasteten Stellen finden, für Stabilität und Langlebigkeit dieser Gummiartikel im Wesentlichen verantwortlich. Daher werden an diese Kautschukmischungen für Fahrzeugluftreifen, Gurte, Riemen und Schläuche sehr hohe Anforderungen gestellt.

Es bestehen Zielkonflikte zwischen den meisten der bekannten Reifeneigenschaften wie Nassgriffverhalten, Trockenbremsen, Rollwiderstand, Wintereigenschaften, Abriebverhalten und Reißeigenschaften. Diese Eigenschaften sind auch bei technischen Gummiartikeln, wie Gurte, Riemen und Schläuche, ein wichtiges Qualitätskriterium.

Insbesondere bei Fahrzeugreifen wurden vielfältige Versuche unternommen, die Eigenschaften des Reifens durch die Variation der Polymerkomponenten, der Füllstoffe und der sonstigen Zuschlagstoffe vor allem in der Laufstreifenmischung positiv zu beeinflussen.

Dabei muss man berücksichtigen, dass eine Verbesserung in der einen Reifeneigenschaft oft eine Verschlechterung einer anderen Eigenschaft mit sich bringt.

In einem gegebenen Mischungssystem existieren zum Beispiel verschiedene, bekannte Möglichkeiten den Rollwiderstand zu optimieren. Zu erwähnen sind hier die Senkung der Glasübergangstemperatur der Kautschukmischung, die Reduzierung des Füllgrades und der Wechsel des Polymersystems. Alle genannten Maßnahmen führen dabei zu einer Verschlechterung der Abriebeigenschaften und/oder Nassgriffeigenschaften und/oder Reißeigenschaften der gegebenen Mischung.

Unter dem Begriff Fahrzeugreifen werden in der vorliegenden Schrift Fahrzeugluftreifen, Vollgummireifen und Zweiradreifen verstanden.

Insbesondere die Beeinflussung der Glasübergangstemperatur der verwendeten Kautschukmischung durch die Wahl geeigneter Polymersysteme wird in der Fachwelt vielfach diskutiert.

Dabei ist bekannt, dass bei sonst gleichen Mischungsbestandteilen zweier Kautschukmischungen deren Glasübergangstemperatur durch die Glasübergangstemperatur des eingesetzten Polymers / der eingesetzten Polymere bestimmt wird. Je höher die Glasübergangstemperatur eines Polymers, desto höher ist auch die Glasübergangstemperatur der Kautschukmischung und desto schlechter ist das Rollwiderstandsverhalten der Kautschukmischung. Gute Indikatoren für das Rollwiderstandsverhalten von Kautschukmischungen sind die Rückprallelastizitäten bei 60 bis 70 °C und die Werte für den Hystereseverlust, ausgedrückt durch den tan δ bei 60 bis 70 °C.

Im Stand der Technik ist allgemein bekannt, dass 1,4-Polybutadien-Kautschuk eine sehr niedrige Glasübergangstemperatur von ca. -105 °C aufweist, wodurch sich dieser Kautschuk für die Verbesserung des Rollwiderstandsverhaltens von Kautschukmischungen eignet. Allerdings ist ebenfalls bekannt, dass hierdurch das Nassgriffverhalten der Kautschukmischung erheblich verschlechtert wird.

Um Reifeneigenschaften wie Abrieb, Nassrutschverhalten und Rollwiderstand zu beeinflussen, ist es zudem bekannt, verschiedene Styrol-Butadien-Copolymere mit unterschiedlichen Styrol- und Vinyl-Gehalten und mit unterschiedlichen Modifizierungen für die Kautschukmischungen zu verwenden, wobei auch hier die beschriebene Problematik der Zielkonflikte auftritt.

Aus WO2009007167A1 ist zur Verbesserung des Nassgriffs bekannt, zwei verschiedene Polymere mit unterschiedlichen Glasübergangstemperaturen einzusetzen.

Ebenso zur Verbesserung des Nassgriffs werden in EP 065982 A1 20 bis 80 phr Dienkautschuk, hier konkret Naturkautschuk, und 80 bis 20 phr Styrol-Butadien-Copolymer mit einer Glasübergangstemperatur zwischen -50°C und -25°C verwendet. Der Einsatz von 10 bis 50 phr Dienkautschuk, hier Styrol-Butadien-Kautschuk, mit einer Glasübergangstemperatur kleiner als -45°C zur Verbesserung des Verhältnisses von Trocken- und Nassgriff wird in EP 1253170 A1 beschrieben. In US 6,812,822 B2 wiederum werden 5 bis 40 phr Styrol-Butadien-Copolymer mit einer Glasübergangstemperatur von -35°C oder höher und 95 bis 60 phr diolefinischer Kautschuk mit einer Glasübergangstemperatur von -20°C oder weniger zur Verbesserung der Dämpfungseigenschaften ("vibration-isolating properties") der Kautschukmischung eingesetzt.

Die DE 40 01 822 C2 beschreibt eine Kautschukmasse, umfassend 10 bis 100 Gewichtsteile eines lösungspolymerisierten Styrol-Butadien-Kautschuks mit einem Vinylgehalt in Butadien von 20 bis 70 Gew.-% und einem Styrolgehalt von 54,5 bis 65 Gew.-% und 0 bis 90 Gewichtsteile eines emulsionspolymerisierten Styrol-Butadien-Kautschuks mit einem Glaspunkt von wenigstens -60°C und einem Styrolgehalt von 20 bis 65 Gew.-% und wenigstens 70 Gewichtsteile Ruß, die in diese Kautschukmasse eingemischt werden. Diese Kautschukmasse ist für den Einsatz für Laufflächen von Hochleistungsreifen mit einem großen Hystereseverlust, einem hohen Wärmewiderstand und einer bemerkenswerten Griffigkeit gedacht.

In der DE 698 02 245 T2 wird ein Luftreifen mit einer schwefelvulkanisierbaren Zusammensetzung beschrieben, die gekennzeichnet ist durch 50 bis 90 phr eines Kautschuks mit einer Glasübergangstemperatur im Bereich von -80°C bis -110°C und 10 bis 50 phr mindestens eines Kautschuks mit einer Glasübergangstemperatur im Bereich von -79°C bis +20°C und 15 bis 50 phr eines Harzes. Diese Mischung zeigt verbesserte Laboreigenschaften, welche mit einer verbesserten Reifenabnutzung bei gleichzeitiger Verbesserung der Griffigkeit (durch einen größeren Hystereseverlust) und des Fahrverhaltens korrelieren.

Die Verbesserung des Griffverhaltens durch einen größeren Hystereseverlust, also größerer tan δ bei 0°C, geht jedoch bekanntermaßen mit einer Verschlechterung der Rollwiderstandseigenschaften, also der Dämpfung im Fahrbetrieb, einher, was z.B. in der DE 698 02 245 T2 aus der gleichzeitigen Erhöhung des tan δ bei 60 °C in ESBR und BRhaltigen Kautschukmischungen ersichtlich wird.

Für die Optimierung des Rollwiderstandsverhaltens oder eine Optimierung diverser anderer für den Einsatz im Reifen relevanter Eigenschaften von Kautschukmischungen ohne eine Verschlechterung des Rollwiderstandsverhaltens ist bekannt, den eingesetzten Dienkautschuk derart zu funktionalisieren, dass eine Anbindung an den oder die Füllstoff(e) erfolgt.

So wird beispielsweise in der EP 2357211 A1 eine Kautschukmischung offenbart, die zumindest ein aliphatisches und/oder aromatisches Kohlenwasserstoffharz, zumindest einen Füllstoff und zumindest einen funktionalisierten Dienkautschuk enthält, dessen Funktionalisierung entlang der Polymerkette und/oder am Ende vorliegt und eine Anbindung an Füllstoffe ermöglicht, wobei der Dienkautschuk eine Glasumwandlungstemperatur T_{g} von -110 bis -15 °C aufweist. Als Funktionalisierungen werden in der Tabelle 1 Hydroxy-Gruppen für eine Anbindung der Polymere an Kieselsäure offenbart.

In der EP 2289990 A1 wird eine Kautschukmischung offenbart, die gleiche Mengen an Kieselsäure und Ruß sowie funktionalisierte Polymere enthält, wobei u.a. die Verwendung von 50 phr aminofunktionalisiertem Polybutadien anstelle von 50 phr eines unfunktionalisierten Polybutadiens offenbart wird. Eine solche Kautschukmischung zeigt verbesserte Rollwiderstandsindikatoren (Rebound 100 °C) während der Einfluss auf die Reißeigenschaften, insbesondere die Weiterreißeigenschaften, in der EP 2289990 A1 nicht offenbart wird.

Der vorliegenden Erfindung liegt daher die Aufgabe zugrunde, eine Kautschukmischung bereitzustellen, die im Vergleich zum Stand der Technik eine weitere Verbesserung der Rollwiderstandsindikatoren und gleichzeitig verbesserte Reißeigenschaften aufweist.

Gelöst wird diese Aufgabe durch eine Kautschukmischung, die die folgenden Bestandteile enthält:
- 5 bis 95 phr zumindest eines lösungspolymerisierten Styrol-Butadien-Kautschuks, der aminofunktionalisiert ist und dessen Styrol-Gehalt 0,1 bis 12 Gew.-% beträgt und der im unvulkanisierten Zustand eine Glasübergangstemperatur gemäß DSC von -75 bis -120 °C aufweist, und
- 5 bis 95 phr zumindest eines weiteren Dienkautschuks und
- 20 bis 150 phr zumindest eines Rußes.

Überraschenderweise zeigt die Kautschukmischung im Vergleich zum Stand der Technik verbesserte Reißeigenschaften, insbesondere verbesserte Weiterreißeigenschaften, und verbesserte Rollwiderstandsindikatoren.

Die erfindungsgemäße Kautschukmischung zeigt insbesondere im Vergleich zum Stand der Technik eine bessere Abriebresistenz und ein verbessertes Rollwiderstandsverhalten, wenn sie einen Verschnitt aus einem lösungspolymerisiertem Styrol-Butadien-Kautschuk (SSBR) mit einer vergleichsweise hohen Glasübergangstemperatur, T_{g} zwischen - 40 °C und +10 °C (hoch-T_{g}-SSBR), und einem oben beschriebenen aminofunktionalisierten lösungspolymerisiertem Styrol-Butadien-Kautschuk mit einer Glasübergangstemperatur T_{g} von -75 bis -120 °C enthält. Als Stand der Technik wird hierbei insbesondere eine Kautschukmischung mit einer gleichen Glasübergangstemperatur wie die erfindungsgemäße Kautschukmischung enthaltend einen Verschnitt aus im Stand der Technik bekanntem niedrig-Tg Butadien-Kautschuk mit einem hoch-T_{g}-SSBR betrachtet.

Erfindungsgemäß enthält die Kautschukmischung zumindest einen lösungspolymerisierten Styrol-Butadien-Kautschuk, der aminofunktionalisiert ist und dessen Styrol-Gehalt 0,1 bis 12 Gew.-% beträgt und der im unvulkanisierten Zustand eine Glasübergangstemperatur Tg gemäß DSC von -75 bis -120 °C aufweist. Unter aminofunktionalisiert ist im Rahmen der vorliegenden Anmeldung zu verstehen, dass der Kautschuk entlang der Polymerkette mehrere Amino-Gruppen und/oder am Kettenende jeweils einer Polymerkette eine oder mehrere Amino-Gruppe(n) trägt. Hierbei ist es auch denkbar, dass nicht alle Polymerketten eine Amino-Gruppe aufweisen. Der Gewichtsanteil von aminofunktionalisierten Polymerketten beträgt dabei bevorzugt 30 bis 100 Gew.-%, besonders bevorzugt 50 bis 100 Gew.-% und ganz besonders bevorzugt 70 bis 100 Gew.-%.

Der genannte lösungspolymerisierte Styrol-Butadien-Kautschuk weist im unvulkanisierten Zustand eine Glasübergangstemperatur von -75 °C bis -120°C, bevorzugt -75 bis -110 °C, besonders bevorzugt -80 bis -110 °C, ganz besonders bevorzugt -80°C bis -100 °C, auf und kann somit als Styrol-Butadien-Kautschuk mit einer vergleichsweise niedrigen Glasübergangstemperatur angesehen werden.

Damit ersetzt dieser lösungspolymerisierte Styrol-Butadien-Kautschuk in der erfindungsgemäßen Kautschukmischung im Stand der Technik bekannte Dienkautschuke mit einer niedrigen Glasübergangstemperatur, insbesondere Butadienkautschuk (=BR, Polybutadien), bei einer gleichzeitigen Verbesserung des Rollwiderstandsverhaltens und der Reißeigenschaften.

Der Styrol-Gehalt des lösungspolymerisierten Styrol-Butadien-Kautschuks beträgt 0,1 bis 12 Gew.-%, bevorzugt 5 bis 12 Gew.-%, besonders bevorzugt 9 bis 11 Gew.-%, bezogen auf die Gesamtmasse des lösungspolymerisierten Styrol-Butadien-Kautschuks.

Der lösungspolymerisierte Styrol-Butadien-Kautschuk weist bevorzugt einen Vinyl-Gehalt bezogen auf den Butadien-Anteil von 1 bis 30 Gew.-%, bevorzugt 1 bis 15 Gew.-%, besonders bevorzugt 5 bis 12 Gew.-% und ganz besonders bevorzugt 7 bis 12 Gew.-%, wiederum ganz besonders bevorzugt von 7 bis 11 Gew.-%. auf. Hierdurch wird eine niedrige Glasübergangstemperatur des Polymers erzielt.

Die Bestimmung des Styrol-Gehaltes und des Vinyl-Gehalts der im Rahmen der vorliegenden Erfindung diskutierten Polymere erfolgt mittels ¹³C-NMR (Lösungsmittel Deuterochloroform CDCl₃; NMR: engl. "nuclear magnetic resonance") und Abgleich mit Daten aus der Infrarot-Spektrometrie (IR; FT-IR Spektrometer der Firma Nicolet, KBr-Fenster 25 mm Durchmesser x 5 mm, 80 mg Probe in 5 mL 1,2-Dichlorbenzol). Die Bestimmung der Glasübergangstemperatur (Tg) erfolgt anhand von Dynamischer Differenz-Kalorimetrie (engl. Dynamic Scanning Calorimetry, DSC gemäß DIN 53765: 1994-03 bzw. ISO 11357-2: 1999-03, Kalibrierte DSC mit Tieftemperatureinrichtung, Kalibrierung nach Gerätetyp und Herstellerangaben, Probe im Aluminiumtiegel mit Aluminiumdeckel, Abkühlung auf Temperaturen niedriger als -120 °C mit 10 °C/min).

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird in dieser Schrift auf 100 Gewichtsteile der gesamten Masse aller in der Mischung vorhandenen hochmolekularen und dadurch festen Kautschuke bezogen.

Der genannte lösungspolymerisierte Styrol-Butadien-Kautschuk ist in Mengen von 5 bis 95, bevorzugt 20 bis 95 phr, besonders bevorzugt 51 bis 95 phr, ganz besonders bevorzugt 70 bis 95 phr und wiederum ganz besonders bevorzugt 80 bis 95 phr, in der erfindungsgemäßen Kautschukmischung enthalten.

Gemäß einer weiteren bevorzugten Ausführungsform der Erfindung ist der genannte lösungspolymerisierte Styrol-Butadien-Kautschuk in Mengen von 5 bis 50 phr, besonders bevorzugt 20 bis 50 phr, ganz besonders bevorzugt 30 bis 40 phr in der erfindungsgemäßen Kautschukmischung enthalten.

Die erfindungsgemäße Kautschukmischung enthält zudem 5 bis 80 phr, bevorzugt 5 bis 49 phr, besonders bevorzugt 5 bis 30 phr und ganz besonders bevorzugt 5 bis 20 phr, wenigstens eines weiteren Dienkautschuks.

Der wenigstens eine weitere Kautschuk ist dabei ausgewählt aus der Gruppe, bestehend aus natürlichem Polyisopren und/oder synthetischem Polyisopren und/oder Butadien-Kautschuk und/oder lösungspolymerisiertem Styrol-Butadien-Kautschuk und/oder emulsionspolymerisiertem Styrol-Butadien-Kautschuk und/oder Flüssigkautschuken mit einem Molekulargewicht Mw von größer als 20000 g/mol und/oder Halobutylkautschuk und/oder Polynorbornen und/oder Isopren-Isobutylen-Copolymer und/oder Ethylen-Propylen-Dien-Kautschuk und/oder Nitrilkautschuk und/oder Chloroprenkautschuk und/oder Acrylat-Kautschuk und/oder Fluorkautschuk und/oder Silikon-Kautschuk und/oder Polysulfidkautschuk und/oder Epichlorhydrinkautschuk und/oder Styrol-Isopren-Butadien-Terpolymer und/oder hydrierter Acrylnitrilbutadienkautschuk und/oder Isopren-Butadien-Copolymer und/oder hydrierter Styrol-Butadien-Kautschuk.

Insbesondere Nitrilkautschuk, hydrierter Acrylnitrilbutadienkautschuk, Chloroprenkautschuk, Butylkautschuk, Halobutylkautschuk oder Ethylen-Propylen-DienKautschuk kommen bei der Herstellung von technischen Gummiartikeln, wie Gurte, Riemen und Schläuche, zum Einsatz.

Besonders bevorzugt ist der weitere Dienkautschuk ausgewählt aus der Gruppe bestehend aus synthetischem Polyisopren und natürlichem Polyisopren und Polybutadien. Bevorzugt handelt es sich bei dem weiteren Dienkautschuk um natürliches Polyisopren. Hiermit wird eine besonders gute Verarbeitbarkeit (Extrudierbarkeit, Mischbarkeit, etc.) der erfindungsgemäßen Kautschukmischung erzielt.

Gemäß einer weiteren bevorzugten Ausführungsform der Erfindung enthält die Kautschukmischung 10 bis 70 phr eines lösungspolymerisierten Styrol-Butadien-Kautschuks aus dem Stand der Technik mit einer Glasübergangstemperatur von -40 bis +10 °C (Hoch-Tg-SSBR) sowie 10 bis 70 phr des aminofunktionalisierten Styrol-Butadien-Kautschuks mit einer Tg von -120 bis -75 °C, bevorzugt von -110 bis -75 °C, besonders bevorzugt von -110 bis -80 °C, ganz besonders bevorzugt von -87 bis -80 °C, wobei dieser in dieser Ausführungsform bevorzugt einen Styrol-Gehalt von 1 bis 12 Gew.-%, besonders bevorzugt 9 bis 11 Gew.-%, ganz besonders bevorzugt von 10 bis 11 Gew.-% aufweist.

Die Kautschukmischung kann weiterhin wenigstens einen weiteren Dienkautschuk, insbesondere natürliches und/oder synthetisches Polyisopren enthalten.

Eine derartige Kautschukmischung ersetzt eine Kautschukmischung aus dem Stand der Technik mit der gleichen Glasübergangstemperatur, wobei im Vergleich zum Stand der Technik durch die Verwendung des beschriebenen funktionalisierten Styrol-Butadien-Kautschuks mit einer Tg von -120 bis -75 °C, bevorzugt von -110 bis -75 °C, besonders bevorzugt von -110 bis -80 °C, ganz besonders bevorzugt von -87 bis -80 °C gleichzeitig die Menge des Hoch-Tg-SSBRs erhöht werden kann, was zu einer gleichzeitigen Verbesserung des Rollwiderstandsverhaltens und der Abriebeigenschaften sowie des Handlingverhaltens führt, wobei die übrigen Reifeneigenschaften, insbesondere die Reißeigenschaften, auf nahezu gleichem Niveau verbleiben oder sogar verbessert werden.

Die erfindungsgemäße Kautschukmischung enthält 20 bis 150 phr, bevorzugt 30 bis 100 phr, besonders bevorzugt 30 bis 85 phr, zumindest eines Rußes als Füllstoff. Dabei sind alle dem Fachmann bekannten Ruß-Typen denkbar. Bevorzugt wird jedoch ein Ruß eingesetzt, der eine Jodadsorptionszahl gemäß ASTM D 1510 von 30 bis 180 g/kg, bevorzugt 40 bis 180 g/kg, besonders bevorzugt 40 bis 130 kg/g, und eine DBP-Zahl gemäß ASTM D 2414 von 80 bis 200 ml/100 g, bevorzugt 100 bis 200 ml/100g, besonders bevorzugt 100 bis 150 ml/100g, aufweist.

Hiermit werden für die Anwendung im Fahrzeugreifen besonders gute Rollwiderstandsindikatoren (Rückprallelastizität bei 70 °C) und Reißeigenschaften erzielt. Die erfindungsgemäße Kautschukmischung kann neben Ruß noch weitere bekannte polare und/oder unpolare Füllstoffe enthalten.

Bevorzugt ist in der erfindungsgemäßen Kautschukmischung Ruß als alleiniger Füllstoff oder als Hauptfüllstoff enthalten, das heißt, dass die Rußmenge deutlich größer ist als die Menge an ggf. anderen enthaltenen Füllstoffen. Für den Fall, dass neben Ruß ein weiterer Füllstoff enthalten ist, handelt es sich bei diesem bevorzugt um Kieselsäure. Somit ist es auch denkbar, dass die erfindungsgemäße Kautschukmischung Ruß und Kieselsäure in ähnlichen Mengen enthält, wie z.B. 20 bis 100 phr Ruß in Kombination mit 20 bis 100 phr Kieselsäure.

Bei den Kieselsäuren kann es sich um die dem Fachmann bekannten Kieselsäuren, die als Füllstoff für Reifenkautschukmischungen geeignet sind, handeln. Besonders bevorzugt ist es allerdings, wenn eine fein verteilte, gefällte Kieselsäure verwendet wird, die eine Stickstoff-Oberfläche (BET-Oberfläche) (gemäß DIN ISO 9277 und DIN 66132) von 35 bis 350 m²/g, bevorzugt von 35 bis 260 m²/g, , besonders bevorzugt von 100 bis 260 m²/g und ganz besonders bevorzugt von 130 bis 235 m²/g, und eine CTAB-Oberfläche (gemäß ASTM D 3765) von 30 bis 400 m²/g, bevorzugt von 30 bis 250 m²/g, besonders bevorzugt von 100 bis 250 m²/g und ganz besonders bevorzugt von 125 bis 230 m²/g, aufweist. Derartige Kieselsäuren führen z. B. in Kautschukmischungen für Reifenlaufstreifen zu besonders guten physikalischen Eigenschaften der Vulkanisate. Außerdem können sich dabei Vorteile in der Mischungsverarbeitung durch eine Verringerung der Mischzeit bei gleichbleibenden Produkteigenschaften ergeben, die zu einer verbesserten Produktivität führen. Als Kieselsäuren können somit z. B. sowohl jene des Typs Ultrasil® VN3 (Handelsname) der Firma Evonik als auch hoch dispergierbare Kieselsäuren, so genannte HD-Kieselsäuren (z.B. Zeosil® 1165 MP der Firma Rhodia), zum Einsatz kommen.

Zur Verbesserung der Verarbeitbarkeit und zur Anbindung der Kieselsäure und anderer ggf. vorhandener polarer Füllstoffe an den Dienkautschuk können Silan-Kupplungsagenzien in Kautschukmischungen eingesetzt werden. Hierbei können ein oder mehrere verschiedene Silan-Kupplungsagenzien in Kombination miteinander eingesetzt werden. Die Kautschukmischung kann somit ein Gemisch verschiedener Silane enthalten. Die Silan-Kupplungsagenzien reagieren mit den oberflächlichen Silanolgruppen der Kieselsäure oder anderen polaren Gruppen während des Mischens des Kautschuks bzw. der Kautschukmischung (in situ) oder bereits vor der Zugabe des Füllstoffes zum Kautschuk im Sinne einer Vorbehandlung (Vormodifizierung). Als Silan-Kupplungsagenzien können dabei alle dem Fachmann für die Verwendung in Kautschukmischungen bekannten Silan-Kupplungsagenzien verwendet werden. Solche aus dem Stand der Technik bekannten Kupplungsagenzien sind bifunktionelle Organosilane, die am Siliciumatom mindestens eine Alkoxy-, Cycloalkoxy- oder Phenoxygruppe als Abgangsgruppe besitzen und die als andere Funktionalität eine Gruppe aufweisen, die gegebenenfalls nach Spaltung eine chemische Reaktion mit den Doppelbindungen des Polymers eingehen kann. Bei der letztgenannten Gruppe kann es sich z. B. um die folgenden chemischen Gruppen handeln:
-SCN, -SH, -NH₂ oder -Sₓ- (mit x = 2 bis 8).

So können als Silan-Kupplungsagenzien z. B. 3-Mercaptopropyltriethoxysilan, 3-Thiocyanato-propyltrimethoxysilan oder 3,3'-Bis(triethoxysilylpropyl)polysulfide mit 2 bis 8 Schwefelatomen, wie z. B. 3,3'-Bis(triethoxysilylpropyl)tetrasulfid (TESPT), das entsprechende Disulfid (TESPD) oder auch Gemische aus den Sulfiden mit 1 bis 8 Schwefelatomen mit unterschiedlichen Gehalten an den verschiedenen Sulfiden, verwendet werden. TESPT kann dabei beispielsweise auch als Gemisch mit Industrieruß (Handelsname X50S® der Firma Evonik) zugesetzt werden.

Bevorzugt wird ein Silan-Gemisch eingesetzt, welches zu 40 bis 100 Gew.-% Disulfide, besonders bevorzugt 55 bis 85 Gew.-% Disulfide und ganz besonders bevorzugt 60 bis 80 Gew.-% Disulfide enthält. Ein solches Gemisch ist z.B. unter dem Handelsnamen Si 261® der Firma Evonik erhältlich, welches z.B. in der DE 102006004062 A1 beschrieben ist. Auch geblockte Mercaptosilane, wie sie z. B. aus der WO 99/09036 bekannt sind, können als Silan-Kupplungsagens eingesetzt werden. Auch Silane, wie sie in der WO 2008/083241 A1, der WO 2008/083242 A1, der WO 2008/083243 A1 und der WO 2008/083244 A1 beschrieben sind, können eingesetzt werden. Verwendbar sind z. B. Silane, die unter dem Namen NXT in verschiedenen Varianten von der Firma Momentive, USA, oder solche, die unter dem Namen VP Si 363® von der Firma Evonik Industries vertrieben werden.

Weiterhin ist es denkbar, dass die Kautschukmischung Kohlenstoffnanoröhrchen (carbon nanotubes (CNT) inklusive diskreter CNTs, sogenannten hollow carbon fibers (HCF) und modifizierter CNT enthaltend eine oder mehrere funktionelle Gruppen, wie Hydroxy-, Carboxy und Carbonyl-Gruppen) enthält.

Auch Graphit und Graphene sowie sogenannte "carbon-silica dual-phase filler" sind als Füllstoff denkbar.

Die Kautschukmischung kann außerdem noch andere polare Füllstoffe, wie beispielsweise Alumosilicate, Kreide, Stärke, Magnesiumoxid, Titandioxid oder Kautschukgele enthalten. Besonders bevorzugt ist die Kautschukmischung jedoch frei von weiteren Füllstoffen und, d.h. in dieser bevorzugten Ausführungsform enthält die Kautschukmischung 0 phr eines weiteren Füllstoffs. Somit ist in dieser Ausführungsform keine Dosierung eines zweiten Füllstoffs notwendig.

Zinkoxid wird im Rahmen der vorliegenden Erfindung nicht als Füllstoff betrachtet.

Es können in der Kautschukmischung noch 0 bis 70 phr, bevorzugt 0,1 bis 60 phr, bevorzugt 0,1 bis 50 phr, zumindest eines Weichmachers vorhanden sein. Hierzu gehören alle dem Fachmann bekannten Weichmacher wie aromatische, naphthenische oder paraffinische Mineralölweichmacher, wie z.B. MES (mild extraction solvate) oder TDAE (treated distillate aromatic extract), oder Rubber-to-Liquid-Öle (RTL) oder Biomass-to-Liquid-Öle (BTL) oder Faktisse oder Weichmacherharze oder Flüssig-Polymere (wie Flüssig-BR), deren mittleres Molekulargewicht (Bestimmung per GPC = gel permeation chromatography, in Anlehnung an BS ISO 11344:2004) zwischen 500 und 20000 g/mol liegt. Werden in der erfindungsgemäßen Kautschukmischung Flüssig-Polymere als Weichmacher eingesetzt, so gehen diese nicht als Kautschuk in die Berechnung der Zusammensetzung der Polymermatrix ein.

Bei der Verwendung von Mineralöl ist dieses bevorzugt ausgewählt aus der Gruppe, bestehend aus DAE (Destillated Aromatic Extracts) und/oder RAE (Residual Aromatic Extract) und/oder TDAE (Treated Destillated Aromatic Extracts) und/oder MES (Mild Extracted Solvents) und/oder naphthenische Öle.

Des Weiteren kann die erfindungsgemäße Kautschukmischung übliche Zusatzstoffe in üblichen Gewichtsteilen enthalten. Zu diesen Zusatzstoffen zählen
a) Alterungsschutzmittel, wie z. B. N-Phenyl-N'-(1,3-dimethylbutyl)-p-phenylendiamin (6PPD), N,N'-Diphenyl-p-phenylendiamin (DPPD), N,N'-Ditolyl-p-phenylendiamin (DTPD), N-Isopropyl-N'-phenyl-p-phenylendiamin (IPPD), 2,2,4-Trimethyl-1,2-dihydrochinolin (TMQ),
b) Aktivatoren, wie z. B. Zinkoxid und Fettsäuren (z. B. Stearinsäure),
c) Wachse,
d) Harze, insbesondere Klebharze,
e) Mastikationshilfsmittel, wie z. B. 2,2'-Dibenzamidodiphenyldisulfid (DBD) und
f) Verarbeitungshilfsmittel, wie z.B. Fettsäuresalze, wie z.B. Zinkseifen, und Fettsäureester und deren Derivate.

Insbesondere bei der Verwendung der erfindungsgemäßen Kautschukmischung für die inneren Bauteile eines Reifens oder eines technischen Gummiartikels, welche direkten Kontakt zu vorhandenen Festigkeitsträgern haben, wird der Kautschukmischung in der Regel noch ein geeignetes Haftsystem, oft in Form von Klebharzen, zugefügt.

Der Mengenanteil der Gesamtmenge an weiteren Zusatzstoffen beträgt 3 bis 150 phr, bevorzugt 3 bis 100 phr und besonders bevorzugt 5 bis 80 phr.

Im Gesamtmengenanteil der weiteren Zusatzstoffe finden sich noch 0,1 bis 10 phr, bevorzugt 0,2 bis 8 phr, besonders bevorzugt 0,2 bis 4 phr, Zinkoxid (ZnO).

Hierbei kann es sich um alle dem Fachmann bekannten Typen an Zinkoxid handeln, wie z.B. ZnO-Granulat oder -Pulver. Das herkömmlicherweise verwendete Zinkoxid weist in der Regel eine BET-Oberfläche von weniger als 10 m²/g auf. Es kann aber auch so genanntes nano-Zinkoxid mit einer BET-Oberfläche von 10 bis 60 m²/g verwendet werden.

Die Vulkanisation wird in Anwesenheit von Schwefel oder Schwefelspendern mit Hilfe von Vulkanisationsbeschleunigern durchgeführt, wobei einige Vulkanisationsbeschleuniger zugleich als Schwefelspender wirken können. Schwefel oder Schwefelspender sowie ein oder mehrere Beschleuniger werden im letzten Mischungsschritt in den genannten Mengen der Kautschukmischung zugesetzt. Dabei ist der Beschleuniger ausgewählt aus der Gruppe bestehend aus Thiazolbeschleunigern und/oder Mercaptobeschleunigern und/oder Sulfenamidbeschleunigern und/oder Thiocarbamatbeschleunigern und/oder Thiurambeschleunigern und/oder Thiophosphatbeschleunigern und/oder Thioharnstoffbeschleunigern und/oder Xanthogenat-Beschleunigern und/oder Guanidin-Beschleunigern.

Bevorzugt ist die Verwendung eines Sulfenamidbeschleunigers, der ausgewählt ist aus der Gruppe bestehend aus N-Cyclohexyl-2-benzothiazolsufenamid (CBS) und/oder N,N-Dicyclohexylbenzothiazol-2-sulfenamid (DCBS) und/oder Benzothiazyl-2-sulfenmorpholid (MBS) und/oder N-tert.Butyl-2-benzothiazylsulfenamid (TBBS).

In einer bevorzugten Ausführungsform der Erfindung enthält die Kautschukmischung CBS als Beschleuniger. Hierdurch werden besonders gute Reißeigenschaften der Kautschukmischung erzielt.

Auch weitere netzwerkbildende Systeme, wie sie beispielsweise unter den Handelsnamen Vulkuren®, Duralink® oder Perkalink® erhältlich sind, oder netzwerkbildende Systeme, wie sie in der WO 2010/049261 A2 beschrieben sind, können in der Kautschukmischung eingesetzt werden. Dieses System enthält ein Vulkanisationsmittel, welches mit einer Funktionalität größer vier vernetzt und zumindest einen Vulkanisationsbeschleuniger. Das Vulkanisationsmittel, welches mit einer Funktionalität von größer vier vernetzt hat beispielsweise die allgemeine Formel A):

A) G[CₐH₂ₐ-CH₂-S_{b}Y]_{c}

wobei G eine polyvalente cyclische Kohlenwasserstoffgruppe und/oder eine polyvalente Heterokohlenwasserstoffgruppe und/oder eine polyvalente Siloxangruppe ist, die 1 bis 100 Atome enthält; wobei jedes Y unabhängig ausgewählt aus einer kautschukaktiven Gruppe, Schwefel-enthaltende Funktionalitäten enthält; und wobei a, b und c ganze Zahlen sind, für die unabhängig gilt: a gleich 0 bis 6; b gleich 0 bis 8; und c gleich 3 bis 5.

Die kautschukaktive Gruppe ist bevorzugt ausgewählt ist aus einer Thiosulfonatgruppe, einer Dithiocarbamatgruppe, einer Thiocarbonylgruppe, einer Mercaptogruppe, einer Kohlenwasserstoffgruppe und einer Natriumthiosulfonatgruppe (Bunte-Salzgruppe). Hiermit werden sehr gute Abrieb- und Reißeigenschaften der erfindungsgemäßen Kautschukmischung erzielt.

Im Rahmen der vorliegenden Erfindung werden Schwefel und Schwefelspender, inklusive schwefelspendende Silane wie TESPT, und Vulkanisationsbeschleuniger wie oben beschrieben und Vulkanisationsmittel, die mit einer Funktionalität größer 4 vernetzen, wie in der WO 2010/049261 A2 beschrieben, wie z.B. ein Vulkanisationsmittel der Formel A), sowie die oben genannten Systeme Vulkuren®, Duralink® und Perkalink® begrifflich als Vulkanisationsmittel zusammengefasst.

Die erfindungsgemäße Kautschukmischung enthält bevorzugt wenigstens eines dieser Vulkanisationsmittel, wodurch sich aus der erfindungsgemäßen Kautschukmischung Vulkanisate, insbesondere für die Anwendung im Fahrzeugreifen, herstellen lassen.

Außerdem können in der Kautschukmischung Vulkanisationsverzögerer vorhanden sein.

Eine weitere Aufgabe der vorliegenden Erfindung besteht darin, einen Fahrzeugreifen bereitzustellen, der sich durch ein verbessertes Rollwiderstandsverhalten und verbesserte Reißeigenschaften, insbesondere eine erhöhte Weiterreißbeständigkeit, auszeichnet. Gelöst wird diese Aufgabe dadurch, dass der Fahrzeugreifen in wenigstens einem Bauteil die erfindungsgemäße Kautschukmischung wie oben beschrieben enthält. Dabei gelten alle oben genannten Ausführungen zu den Bestandteilen und deren Merkmale.

Bevorzugt handelt es sich bei dem Bauteil um einen Laufstreifen. Wie dem Fachmann bekannt ist, trägt der Laufstreifen zu einem relativ hohen Anteil zum Gesamtrollwiderstand des Reifens bei. Insbesondere ist auch ein hoher Widerstand gegenüber Rissbildung und Rissfortpflanzung im Laufstreifen vorteilhaft.

Eine weitere Aufgabe der vorliegenden Erfindung besteht, darin, das Rollwiderstandsverhalten und die Reißeigenschaften von Fahrzeugreifen zu verbessern. Gelöst wird diese Aufgabe erfindungsgemäß durch die Verwendung der oben beschriebenen Kautschukmischung mit allen Ausführungsformen und Merkmalen in Fahrzeugreifen, insbesondere im Laufstreifen eines Fahrzeugreifens und/oder einer Body-Mischung eines Fahrzeugreifens.

Der Erfindung liegt weiterhin die Aufgabe zu Grunde, das Abriebverhalten und die Reißeigenschaften von technischen Gummiartikeln, wie bspw. Riemen, Gurte und Schläuche, zu optimieren, ohne dass andere für den jeweiligen Einsatz relevante Eigenschaften signifikant negativ beeinträchtigt werden.

Gelöst wird diese Aufgabe durch die Verwendung der obig beschriebenen Kautschukmischung, zur Herstellung von technischen Gummiartikeln, wie bspw. Riemen, Gurte und Schläuche, zu verwenden.

Als Body-Mischung werden hierbei die Kautschukmischungen für die inneren Bauteile eines Reifen bezeichnet. Als innere Reifenbauteile werden im Wesentlichen Squeegee, Seitenwand, Innenseele (Innenschicht), Kernprofil, Gürtel, Schulter, Gürtelprofil, Karkasse, Wulstverstärker, Wulstprofil, Hornprofil und Bandage bezeichnet.

Die Herstellung der erfindungsgemäßen Kautschukmischung erfolgt nach dem in der Kautschukindustrie üblichen Verfahren, bei dem zunächst in ein oder mehreren Mischstufen eine Grundmischung mit allen Bestandteilen außer dem Vulkanisationssystem (Schwefel und vulkanisationsbeeinflussende Substanzen) hergestellt wird. Durch Zugabe des Vulkanisationssystems in einer letzten Mischstufe wird die Fertigmischung erzeugt. Die Fertigmischung wird z.B. durch einen Extrusionsvorgang weiterverarbeitet und in die entsprechende Form gebracht.

Zur Verwendung in Fahrzeugreifen wird die Mischung bevorzugt in die Form eines Laufstreifens gebracht und bei der Herstellung des Fahrzeugreifenrohlings wie bekannt aufgebracht. Der Laufstreifen kann aber auch in Form eines schmalen Kautschukmischungsstreifens auf einen Reifenrohling aufgewickelt werden. Bei zweigeteilten Laufstreifen (oberer Teil: Cap und unterer Teil: Base) kann die erfindungsgemäße Kautschukmischung sowohl für die Cap als auch für die Base verwendet werden.

Die Herstellung der erfindungsgemäßen Kautschukmischung zur Verwendung als Body-Mischung in Fahrzeugreifen erfolgt wie bereits für den Laufstreifen beschrieben. Der Unterschied liegt in der Formgebung nach dem Extrusionsvorgang. Die so erhaltenen Formen der erfindungsgemäßen Kautschukmischung für eine oder mehrere unterschiedliche Body-Mischungen dienen dann dem Aufbau eines Reifenrohlings. Zur Verwendung der erfindungsgemäßen Kautschukmischung in Riemen und Gurten, insbesondere in Fördergurten, wird die extrudierte Mischung in die entsprechende Form gebracht und dabei oder nachher häufig mit Festigkeitsträgern, z.B. synthetische Fasern oder Stahlcorde, versehen. Zumeist ergibt sich so ein mehrlagiger Aufbau, bestehend aus einer und/oder mehrerer Lagen Kautschukmischung, einer und/oder mehrerer Lagen gleicher und/oder verschiedener Festigkeitsträger und einer und/oder mehreren weiteren Lagen dergleichen und/oder einer anderen Kautschukmischung.

Zur Verwendung der erfindungsgemäßen Kautschukmischung in Schläuchen wird häufig keine so genannte Schwefelvernetzung, sondern eine peroxidische Vernetzung bevorzugt.

Die Herstellung der Schläuche erfolgt analog dem im Handbuch der Kautschuktechnologie, Dr. Gupta Verlag, 2001, Kapitel 13.4 beschriebenen Verfahren.

Die Erfindung soll nun anhand von Vergleichs- und Ausführungsbeispielen, die in der Tabelle 1 zusammengefasst sind, näher erläutert werden.

Die Vergleichsmischungen sind mit V, die erfindungsgemäßen Mischungen sind mit E gekennzeichnet.

Die Mischungsherstellung erfolgte unter üblichen Bedingungen in drei Stufen in einem Labortangentialmischer. Aus sämtlichen Mischungen wurden Prüfkörper durch optimale Vulkanisation unter Druck bei 160 °C hergestellt und mit diesen Prüfkörpern für die Kautschukindustrie typische Materialeigenschaften mit den im Folgenden angegebenen Testverfahren ermittelt.
- Shore-A-Härte bei Raumtemperatur (RT) gemäß DIN ISO 7619-1
- Rückprallelastizität bei 70 °C gemäß DIN 53 512
- Zugfestigkeit, Reißdehnung und Spannungswert bei 300% statischer Dehnung (Modul 300) bei Raumtemperatur gemäß DIN 53 504
- Hochgeschwindigkeitsbruchdehnung als Reißenergie pro verformtem Volumen bei Raumtemperatur gemäß High Speed Tear Energy Test (HSTE) nach DIN EN 10 045
- Weiterreißwiderstand nach Graves bei 100 °C in Anlehnung an ISO 34-1, jeweils bei einer Temperatur arithmetisches Mittel der Werte über parallel und senkrecht zur Walzrichtung ausgestanzte Probekörper
- Abrieb bei Raumtemperatur gemäß DIN53 516 bzw. DIN/ISO 4649
- Glasübergangstemperatur T_{g} der Kautschukmischung (Mischungs-Tg) aus Verlustfaktor tan δ (tangens delta) aus dynamisch-mechanischer Messung gemäß DIN 53 513 (Temperaturdurchlauf, "temperature sweep")

**Tabelle 1**

| **Bestandteile** | **Einheit** | **V1** | **E1** | **V2** | **E2** |
|---|---|---|---|---|---|
| BR ^{a)} | phr | 90 | - | 40 | - |
| SSBR ^{b)} | phr | - | 90 | - | 35 |
| SSBR ^{c)} | phr | - | - | 50 | - |
| SSBR ^{d)} | phr | - | - | - | 55 |
| NR: TSR | phr | 10 | 10 | 10 | 10 |
| Ruß N339 | phr | 85 | 85 | 85 | 85 |
| TDAE | phr | 45 | 45 | 45 | 45 |
| Alterungsschutzmittel | phr | 4 | 4 | 4 | 4 |
| Stearinsäure | phr | 2,5 | 2,5 | 2,5 | 2,5 |
| ZnO | phr | 2,5 | 2,5 | 2,5 | 2,5 |
| Beschleuniger CBS | phr | 2 | 2 | 2 | 2 |
| Schwefel | phr | 2 | 2 | 2 | 2 |

| **Physikalische Eigenschaften** | | | | | |
|---|---|---|---|---|---|
| Shore Härte RT | Shore A | 63 | 64 | 63 | 61 |
| Rückprallelast. 70 °C | % | 53 | 55 | 45 | 49 |
| Zugfestigkeit | MPa | 13 | 14 | 12 | 13 |
| Reißdehnung | % | 356 | 343 | 376 | 380 |
| Modul 300 | MPa | 11 | 13 | 10 | 11 |
| HSTE | MJ/m³ | 3 | 3,5 | - | - |
| Graves bei 100 °C | N/mm | 22 | 31 | - | - |
| T_{g} | °C | - | - | -26 | -24 |
| Abrieb | mm³ | - | - | 120 | 119 |

### Verwendete Substanzen aus Tabelle 1:

a) BR: Polybutadien, Hoch-cis , Nd-katalysierter Butadienkautschuk, unfunktionalisiert, T_{g} = -105 °C, Europrene® NEOCIS BR 40, Fa. Polimeri
b) SSBR: Styrol-Gehalt = 10 Gew.-%, Vinyl-Gehalt = 9 Gew-%, T_{g} = -83 °C, funktionalisiert mit Amino-Gruppen
c) SSBR: Styrol-Gehalt = 24 Gew.-%, Vinyl-Gehalt = 67 Gew-%, T_{g} = -18 °C, Buna VSL 5025. Fa. LanXess
d) SSBR: Styrol-Gehalt = 21 Gew.-%, Vinyl-Gehalt = 64 Gew-%, T_{g} = -21 °C, Nipol® NS 116, Fa. Nippon Zeon

Wie aus Tabelle 1 hervorgeht, führt der Austausch von Butadien-Kautschuk mit einer niedrigen Tg wie in Vergleichsmischung V1 gegen einen mit Amino-Gruppen funktionalisierten SSBR mit einem Styrol-Gehalt von 10 Gew.-% und einer Tg von -83 °C in der erfindungsgemäßen Kautschukmischung E1 zu a) einer Erhöhung der Steifigkeit als Indikator für ein verbessertes Handling, b) einer erhöhten Rückprallelastizität bei 70 °C als Indikator für verbessertes Rollwiderstandsverhalten und c) erhöhten Werten für Weiterreißwiderstand und Hochgeschwindigkeitsbruchdehnung als Reißenergie pro verformtem Volumen als Indikator für verbesserte Reißeigenschaften im Fahrbetrieb.

Aus dem Vergleich V2 vs. E2 geht hervor, dass die erfindungsgemäße Kautschukmischung E2 bei nahezu gleicher Mischungs-T_{g} ein verbessertes Rollwiderstandsverhalten und verbesserte Abriebeigenschaften und ein verbessertes Handling aufweist.

Durch die Verwendung des aminofunktionalisierten SSBRs mit einer vergleichsweise niedrigen Glasübergangstemperatur in der erfindungsgemäßen Kautschukmischung E2 kann gleichzeitig ein höherer Anteil an hoch-Tg-SSBR verwendet werden.

## Patentansprüche

1. Schwefelvernetzbare Kautschukmischung enthaltend
- 5 bis 95 phr zumindest eines lösungspolymerisierten Styrol-Butadien-Kautschuks, der aminofunktionalisiert ist und dessen Styrol-Gehalt 0,1 bis 12 Gew.-% beträgt und der im unvulkanisierten Zustand eine Glasübergangstemperatur gemäß DSC von -75 bis -120 °C aufweist, und
- 5 bis 95 phr zumindest eines weiteren Dienkautschuks und
- 20 bis 150 phr zumindest eines Rußes.

2. Schwefelvernetzbare Kautschukmischung nach Anspruch 1, **dadurch gekennzeichnet, dass** sie 10 bis 70 phr des aminofunktionalisierten Styrol-Butadien-Kautschuks mit einer Tg von -75 bis -120 °C sowie 10 bis 70 phr eines lösungspolymerisierten Styrol-Butadien-Kautschuks mit einer Glasübergangstemperatur von -40 bis +10 °C enthält.

3. Schwefelvernetzbare Kautschukmischung nach einem der vorherigen Ansprüche, **dadurch gekennzeichnet, dass** die Glasübergangstemperatur des lösungspolymerisierten aminofunktionalisierten Styrol-Butadien-Kautschuks im unvulkanisierten Zustand -80 bis -110 °C beträgt.

4. Schwefelvernetzbare Kautschukmischung nach einem der vorherigen Ansprüche, **dadurch gekennzeichnet, dass** der lösungspolymerisierte aminofunktionalisierte Styrol-Butadien-Kautschuk einen Vinyl-Anteil von 7 bis 12 Gew.-% aufweist.

5. Schwefelvernetzbare Kautschukmischung nach einem der vorherigen Ansprüche, **dadurch gekennzeichnet, dass** der zumindest eine Ruß eine Jodadsorptionszahl gemäß ASTM D 1510 von 30 bis 180 g/kg eine DBP-Zahl gemäß ASTM D 2414 von 80 bis 200 ml/100 g aufweist.

6. Schwefelvernetzbare Kautschukmischung nach einem der vorherigen Ansprüche, **dadurch gekennzeichnet, dass** die Kautschukmischung frei von Kieselsäure ist.

7. Fahrzeugreifen, **dadurch gekennzeichnet, dass** er in wenigstens einem Bauteil eine schwefelvernetzbare Kautschukmischung nach einem der vorhergehenden Ansprüche enthält.

8. Fahrzeugreifen nach Anspruch 6, **dadurch gekennzeichnet, dass** es sich bei dem Bauteil um einen Laufstreifen und/oder eine Seitenwand handelt.

9. Verwendung einer Kautschukmischung nach einem der Ansprüche 1 bis 6 zur Herstellung eines Fahrzeugreifens.

10. Verwendung einer Kautschukmischung nach einem der Ansprüche 1 bis 6 zur Herstellung eines Gurtes, Riemens oder Schlauches.

## Claims

1. Sulfur-crosslinkable rubber mixture comprising
- 5 to 95 phr of at least one solution-polymerized styrene-butadiene rubber, which is amino-functionalized, has a styrene content of 0.1 to 12 wt%, and has a glass transition temperature in the unvulcanized state according to DSC of -75 to -120°C,
- 5 to 95 phr of at least one further diene rubber, and
- 20 to 150 phr of at least one carbon black.

2. Sulfur-crosslinkable rubber mixture according to Claim 1, **characterized in that** it comprises 10 to 70 phr of the amino-functionalized styrene-butadiene rubber with a Tg of -75 to 120°C, and also from 10 to 70 phr of a solution-polymerized styrene-butadiene rubber with a glass transition temperature of -40 to +10°C.

3. Sulfur-crosslinkable rubber mixture according to either of the preceding claims, **characterized in that** the glass transition temperature of the solution-polymerized amino-functionalized styrene-butadiene rubber in the unvulcanized state is -80 to -110°C.

4. Sulfur-crosslinkable rubber mixture according to any of the preceding claims, **characterized in that** the solution-polymerized amino-functionalized styrene-butadiene rubber has a vinyl content of 7 to 12 wt%.

5. Sulfur-crosslinkable rubber mixture according to any of the preceding claims, **characterized in that** the at least one carbon black has an iodine adsorption number according to ASTM D 1510 of 30 to 180 g/kg and a DBP number according to ASTM D 2414 of 80 to 200 ml/100 g.

6. Sulfur-crosslinkable rubber mixture according to any of the preceding claims, **characterized in that** the rubber mixture is free from silica.

7. Vehicle tire, **characterized in that** it contains a sulfur-crosslinkable rubber mixture according to one of the preceding claims in at least one component.

8. Vehicle tire according to Claim 6, **characterized in that** the component is a tread and/or a side wall.

9. Use of a rubber mixture according to one of Claims 1 through 6 for manufacturing a vehicle tire.

10. Use of a rubber mixture according to one of Claims 1 through 6 for manufacturing a strap, belt, or hose.

## Revendications

1. Mélange de caoutchouc réticulable par le soufre, contenant
- 5 à 95 parties par cent parties d'au moins un caoutchouc de styrène-butadiène polymérisé en solution qui est fonctionnalisé par amino et dont la teneur en styrène est de 0,1 à 12% en poids et qui présente, dans l'état non vulcanisé, une température de transition vitreuse selon DSC (calorimétrie différentielle à balayage) de -75 à -120°C et
- 5 à 95 parties par cent parties d'au moins un autre caoutchouc de diène et
- 20 à 150 parties par cent parties d'au moins une suie.

2. Mélange de caoutchouc réticulable par le soufre selon la revendication 1, **caractérisé en ce qu'**il contient 10 à 70 parties par cent parties du caoutchouc de styrène-butadiène fonctionnalisé par amino présentant une Tg de -75 à -120°C ainsi que 10 à 70 parties par cent parties d'un caoutchouc de styrène-butadiène polymérisé en solution présentant une température de transition vitreuse de -40 à +10°C.

3. Mélange de caoutchouc réticulable par le soufre selon l'une quelconque des revendications précédentes, **caractérisé en ce que** la température de transition vitreuse du caoutchouc de styrène-butadiène polymérisé en solution fonctionnalisé par amino, dans l'état non vulcanisé, est de -80 à -110°C.

4. Mélange de caoutchouc réticulable par le soufre selon l'une quelconque des revendications précédentes, **caractérisé en ce que** le caoutchouc de styrène-butadiène fonctionnalisé par amino polymérisé en solution présente une proportion de vinyle de 7 à 12% en poids.

5. Mélange de caoutchouc réticulable par le soufre selon l'une quelconque des revendications précédentes, **caractérisé en ce que** ladite au moins une suie présente un indice d'adsorption d'iode selon la norme ASTM D 1510 de 30 à 180 g/kg et un indice de DPB (phtalate de dibutyle) selon la norme ASTM D 2414 de 80 à 200 ml/100 g.

6. Mélange de caoutchouc réticulable par le soufre selon l'une quelconque des revendications précédentes, **caractérisé en ce que** le mélange de caoutchouc est exempt de silice.

7. Pneumatique pour véhicule, **caractérisé en ce qu'**il contient, dans au moins un élément, au moins un mélange de caoutchouc réticulable par le soufre selon l'une quelconque des revendications précédentes.

8. Pneumatique pour véhicule selon la revendication 6, **caractérisé en ce qu'**il s'agit, pour l'élément, d'une bande de roulement et/ou d'un flanc.

9. Utilisation d'un mélange de caoutchouc selon l'une quelconque des revendications 1 à 6 pour la fabrication d'un pneumatique pour véhicule.

10. Utilisation d'un mélange pour caoutchouc selon l'une quelconque des revendications 1 à 6 pour la fabrication d'une ceinture, d'une courroie ou d'un tuyau souple.
